# FASCICULE DE BREVET EUROPEEN

(11) **EP 1 026 291 B1**
(45) Date de publication et mention de la délivrance du brevet: **16.08.2001**
(21) Numéro de dépôt: 00420013.5
(22) Date de dépôt: 20.01.2000
(51) Int. Cl.: D01F 6/60, D01F 6/80, D01F 1/10, A01D 34/00, A01K 91/00

(54) **Fil de coupe ou fil de pêche en matière synthétique**
Schneiddraht oder Angelleine aus Kunststoff
Plastic cutting line or fishing line

(30) Priorité: 03.02.1999 FR 9901418
(43) Date de publication de la demande: 09.08.2000
(73) Titulaire: Speed France, 69400 Arnas (FR)
(72) Inventeur: Legrand, Emmanuel, 01480 Villeneuve (FR)
(74) Mandataire: Bratel, Gérard

(56) Documents cités:
- WO-A-93/04300
- WO-A-96/02367
- PATENT ABSTRACTS OF JAPAN vol. 015, no. 202 (C-0834), 23 mai 1991 (1991-05-23) & JP 03 054227 A (ASAHI CHEM IND CO LTD), 8 mars 1991 (1991-03-08)
- PATENT ABSTRACTS OF JAPAN vol. 018, no. 562 (C-1265), 27 octobre 1994 (1994-10-27) & JP 06 205607 A (GOOSEN:KK), 26 juillet 1994 (1994-07-26)

## Description

La présente invention concerne un fil en matière synthétique, pouvant être en particulier un fil de coupe destiné à tailler et couper la végétation, utilisable sur des appareils de motoculture à tête rotative communément appelés débroussailleuses et taille-bordures, mais pouvant être aussi un fil de pêche.

Les débroussailleuses et taille-bordures sont équipés généralement d'un moteur thermique ou électrique qui entraîne en rotation, à une vitesse élevée pouvant être comprise entre environ 3000 tours/minute et 12000 tours/minute, une tête tournante supportant un ou plusieurs fils de coupe. Au cours de la rotation de la tête, et sous l'effet de la force centrifuge, le ou les fils de coupe se déploient radialement et balayent ainsi une certaine zone circulaire, à l'intérieur de laquelle ils exercent un effet tranchant sur la végétation rencontrée.

Les fils de coupe couramment fabriqués et commercialisés, destinés à une telle utilisation, sont des monofilaments extérieurement lisses, le plus souvent du type "monomatière", qui ont par conséquent les qualités et les faiblesses de la matière première utilisée pour les réaliser.

Les matières premières les plus fréquemment utilisées pour la réalisation des fils de coupe sont des matières synthétiques, et plus particulièrement le polyamide 6, le copolyamide 6/66 et le copolyamide 6/12. Ces matières peuvent être légèrement modifiées ou chargées, pour améliorer leurs caractéristiques de base.

Ces matières sont habituellement extrudées sous forme de monofilaments pouvant avoir des diamètres et des sections variées, en particulier une section ronde, mais aussi des profils polygonaux ou en étoile.

Les fils de coupe actuellement fabriqués constituent donc des bons compromis, mais leurs caractéristiques, performances et autres qualités restent limitées par les propriétés des matières premières utilisées pour leur fabrication. Ces fils de coupe conservent ainsi, malgré leurs qualités, certains défauts ou insuffisances.

Le Demandeur a déjà proposé de pallier à certains inconvénients des fils de coupe classiques, en proposant des fils de coupe de constitution et/ou composition particulières, notamment des fils qui possèdent une partie interne ou "âme", réalisée dans une première matière, et une partie externe ou "peau" en une autre matière, enrobant l'âme et formant la surface extérieure du fil de coupe.

Ainsi, la demande de brevet français N° 2760596 au nom du Demandeur propose un fil de coupe dont l'âme de type monofilament, réalisée en une matière synthétique telle que polyamide, est enrobée d'un revêtement granuleux, notamment sous forme de particules minérales, qui donne au fil un aspect de surface irrégulier et/ou rugueux, ceci permettant en particulier une réduction des nuisances sonores lors de l'utilisation du fil de coupe.

La demande de brevet français N° 2763787 au nom du Demandeur décrit un autre fil de coupe, dont l'âme de type monofilament ou multifilament est réalisée en une matière synthétique à bonnes caractéristiques de raideur et de résistance à la traction, telle que polyamide, polyester, polypropylène ou polyéthylène, tandis que la peau est en polyuréthane, qui possède une excellente résistance aux chocs et à l'abrasion.

Une autre demande de brevet français N° 2766324 au nom du Demandeur propose un fil de coupe constitué par une âme simple ou multiple en une matière choisie pour ses qualités de biodégradabilité et/ou photodégradabilité, qui est enrobée d'une matière synthétique telle que polyamide ou polyuréthane, cette composition visant à améliorer la dégradabilité du fil après utilisation, tout en conservant à ce fil des caractéristiques mécaniques très convenables.

Toutefois, ces solutions ne résolvent pas encore au mieux tous les problèmes liés aux fils de coupe, et en particulier elles n'évitent pas le phénomène dit de "collage" des fils de coupe à l'intérieur des têtes de débroussailleuses, phénomène qui est le suivant :

Certains appareils puissants sollicitent considérablement le fil de coupe à l'intérieur de leur tête rotative, en raison des vibrations et des tensions du fil dues à la rotation de ladite tête à une très grande vitesse, pouvant atteindre 12000 tours/minute. Il en résulte une importante montée en température, très proche du point, de fusion des fils de coupe traditionnels (de 200 à 222° C), et cette montée en température va jusqu'à provoquer un collage entre elles des spires de fil enroulées sur la bobine logée dans la tête rotative, à la manière d'une soudure "haute fréquence" par vibrations.

La présente invention vise à remédier à cet inconvénient, en fournissant un fil de coupe perfectionné, évitant en particulier ce phénomène de collage, et conservant aussi d'excellentes qualités mécaniques, notamment en termes de résistance à l'abrasion et à l'usure, les propriétés de ce fil le rendant aussi avantageusement applicable à d'autres domaines, et en particulier utilisable comme fil de pêche.

A cet effet, l'invention a essentiellement pour objet un fil en matière synthétique, en particulier un fil de coupe pour débroussailleuses et taille-bordures, ou un fil de pêche, ce fil comprenant un corps en polyamide ou copolyamide, dans lequel sont insérées des particules de polymère d'aramide ou de para-aramide.

De façon surprenante, il a en effet été constaté que l'incorporation d'une faible quantité de particules de polymère d'aramide ou de para-aramide, cette quantité pouvant représenter entre 0,5% et 5% de la masse totale, dans un fil de coupe en polyamide ou en copolyamide, évite efficacement le phénomène de collage du fil dans les têtes de débroussailleuses. L'incorporation de telles particules augmente aussi, de façon sensible, la résistance du fil de coupe à l'abrasion et à l'usure, comme l'ont démontré des essais effectués par le Demandeur, qui ont mis en évidence une diminution de l'ordre d'au moins 15% de la perte de poids du fil, en comparaison avec un fil de coupe classique, dans les mêmes conditions d'utilisation.

Cette amélioration des qualités du fil de coupe peut notamment s'expliquer par le fait que les particules de polymère d'aramide ou de para-aramide, qui ne fondent pas au-dessous d'une température de 500° C, sont présentes aussi bien à la surface du fil de coupe qu'à l'intérieur de celui-ci, dans toute sa section, et sont donc aussi présentes à l'extrémité du fil qui subit les chocs contre d'éventuels obstacles. De plus, la présence de ces particules à la surface du fil, où elles forment de petites aspérités, améliore le pouvoir coupant du fil, en cours d'utilisation.

En particulier, les particules de polymère d'aramide ou de para-aramide, préconisées par la présente invention, possèdent une résistance à la rupture très élevée, et une excellente stabilité thermique, ce qui rend particulièrement avantageuse leur inclusion dans les fils de coupe, ainsi que dans les fils de pêche. Ces qualités ne sont pas obtenues, du moins au même degré, avec l'utilisation de particules minérales, telles que le prévoient les documents JP 06205607 ou WO 9602367, à moins de prévoir des réalisations de fil beaucoup plus complexes, par exemple avec incorporation additionnelle d'un agent de stabilisation thermique (cas du document WO 9602367).

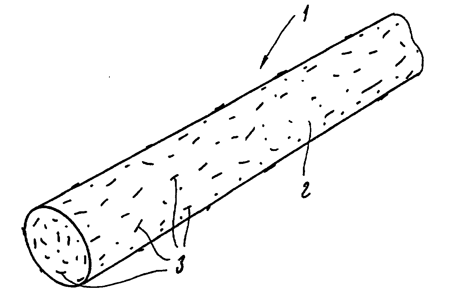

L'invention sera de toute façon mieux comprise à l'aide de la description qui suit, en référence au dessin schématique annexé représentant, à titre d'exemple, une forme d'exécution de ce fil.

L'unique figure du dessin représente, en perspective, un court tronçon de fil de coupe conforme à la présente invention, en faisant apparaître la section de ce fil.

Dans l'exemple illustré, le fil de coupe 1 possède une section circulaire. Le corps 2 du fil de coupe 1 est réalisé, par exemple, en copolyamide plastifié et assoupli.

Dans le corps 2 du fil de coupe 1 sont insérées des particules 3 de polymère d'aramide ou de para-aramide, tel que celui commercialisé par DU PONT DE NEMOURS sous la dénomination "KEVLAR" (marque enregistrée). Les particules représentent par exemple environ 1% de la masse totale du fil 1. Ces particules 3 sont présentes aussi bien à la surface du fil de coupe 1, que dans toute sa section, comme l'illustre la figure.

La présence de telles particules 3 évite le phénomène de "collage" défini plus haut, et améliore aussi de façon sensible la résistance du fil de coupe 1 à l'abrasion et à l'usure.

Cette amélioration a été, en particulier, mise en évidence par des essais comparatifs, effectués avec un fil de coupe d'un diamètre de 3 mm, tournant à une vitesse de 6000 tours/minute, durant une minute, le fil venant heurter un obstacle en brique. Les éprouvettes de fils utilisées étant initialement toutes de même longueur, celles-ci ont été, à chaque fois, pesées avant essai et après essai, de manière à mesurer leur perte de poids résultant de l'usure sur l'obstacle.

Avec un fil de coupe de composition traditionnelle, la perte en poids du fil par usure, évaluée en faisant la moyenne des valeurs mesurées successivement sur 20 essais, a été de 14,17% (par rapport au poids initial du fil).

Avec un fil de coupe chargé de particules de polymère de para-aramide, conformément à l'invention, la perte de poids du fil évaluée dans les mêmes conditions, donc toujours comme moyenne des mesures faites sur 20 essais successifs, a été seulement de 11,71%.

Ainsi, la diminution de la vitesse d'usure du fil de coupe est de l'ordre de 15 à 20 %.

L'on ne s'éloignerait pas du cadre de l'invention, telle que définie dans les revendications annexées :
- en réalisant un fil de même composition, mais de section non circulaire, par exemple une section polygonale, dentelée ou en étoile ;
- en modifiant les proportions des deux composants du fil, ainsi que la granulométrie des particules de polymère d'aramide ou de para-aramide ;
- en utilisant le même fil comme fil de pêche, la composition proposée par la présente invention donnant dans ce cas, au fil de pêche, des qualités de résistance à l'usure et à l'abrasion, ceci notamment au passage à l'oeillet de ce fil de pêche.

## Revendications

1. Fil en matière synthétique, en particulier fil de coupe pour débroussailleuses et taille-bordures, ou fil de pêche, caractérisé en ce qu'il comprend un corps (2) en polyamide ou copolyamide, dans lequel sont insérées des particules (3) de polymère d'aramide ou de para-aramide.

2. Fil selon la revendication 1, caractérisé en ce que les particules (3) de polymère d'aramide ou de para-aramide représentent entre 0,5% et 5% de la masse totale du fil (1).

## Patentansprüche

1. Faden aus Kunststoff, insbesondere Schneidfaden für Freischneidegeräte und Kantenschneider, oder Angelleine, **dadurch gekennzeichnet, dass** er einen Körper (2) aus Polyamid oder Copolyamid umfasst, in dem Teilchen (3) aus einem Polymer von Aramid oder von Para-Aramid eingefügt sind.

2. Faden nach Anspruch 1, **dadurch gekennzeichnet, dass** die Teilchen (3) des Polymers von Aramid oder von Para-Aramid zwischen 0,5 % und 5 % der gesamten Masse des Fadens (1) einnehmen.

## Claims

1. A line made of synthetic material, in particular a cutting line for brushcutters and trimmers, or a fishing line, characterised in that it comprises a body (2) made of a polyamide or copolyamide, into which aramid or para-aramid polymer particles (3) are inserted.

2. The line as claimed in claim 1, characterised in that aramid or para-aramid polymer particles (3) represent between 0.5% and 5% of the total mass of the line (1).
